# FASCICULE DE BREVET EUROPEEN

(11) **EP 2 055 974 B1**
(45) Date de publication et mention de la délivrance du brevet: **07.05.2014**
(21) Numéro de dépôt: 08167716.3
(22) Date de dépôt: 28.10.2008
(51) Int. Cl.: F16D 13/24, F16D 23/02

(54) **Dispositif de synchronisation multi-cônes destiné à être monté sur un arbre d'une boîte de vitesses**
Vorrichtung zur Synchronisation mehrerer Kegel zum Einbau auf die Motorwelle eines Getriebes
Multi-cone synchronisation device designed to be installed on a gearbox shaft

(30) Priorité: 29.10.2007 FR 0758650
(43) Date de publication de la demande: 06.05.2009
(73) Titulaire: Peugeot Citroën Automobiles SA, 78140 Vélizy-Villacoublay (FR)
(72) Inventeur: Lelasseux, Xavier, 92150 Suresnes (FR); Mitchell, Clément, 92250 La Garenne Colombes (FR); Wascheul, Michael, 78260 Achères (FR)

(56) Documents cités:
- FR-A- 550 501
- FR-A- 2 821 652
- FR-A- 2 896 554
- US-A- 3 286 801

## Description

. L'invention concerne un dispositif de synchronisation multi-cônes destiné à être monté sur un arbre d'une boîte de vitesses. L'invention a notamment pour but d'améliorer le ressenti des changements de rapport de la boîte de vitesses en évitant les ruptures de couple.

. L'invention trouve une application particulièrement avantageuse dans le domaine des boîtes de vitesses manuelles pilotées (BVMP) utilisées entre un dispositif de propulsion, tel qu'un moteur thermique ou une machine électrique, et un organe à entraîner, tel que des roues de véhicule automobile ou de moto.

. Tel que connu du document FR 2 896 554, les rapports d'une boîte de vitesses sont formés chacun par une roue liée en rotation à un des arbres de la boîte de vitesses et un pignon fou monté sur un autre arbre.

. Des manchons de crabotage sont utilisés pour lier sélectivement les pignons fous à l'arbre sur lequel ils sont montés afin d'assurer un changement de rapport.

. A cet effet, chaque manchon est lié en rotation à son arbre mais est mobile axialement pour permettre l'accrochage avec le pignon fou. On parle de crabotage lorsque les crabots du manchon entrent en coopération avec un pignon fou de sorte qu'un rapport de vitesse est engagé, et de décrabotage lorsque les crabots du manchon se dégagent du pignon fou de sorte que le rapport est désengagé.

. Ces manchons de crabotage intègrent généralement un synchroniseur qui assure l'égalisation de vitesse, préalablement au crabotage, entre l'arbre et le pignon fou à craboter. A cet effet, le synchroniseur comporte des anneaux de friction superposés qui assurent une transmission de couple par frottement entre l'arbre et le pignon. Une telle pièce correspond en fait à un synchroniseur comportant une couronne de crabots positionnée autour des différents cônes de friction.

. Les synchroniseurs connus comportent au maximum trois surfaces de frottement entre les cônes car il est très difficile d'augmenter la surface de frottement pour augmenter le couple transmis, sans augmenter considérablement l'encombrement de ces synchroniseurs.

. Le document US-A-3 286 801 divulgue un embrayage de synchronisation à cônes multiples.

. L'invention se propose notamment d'augmenter la surface de frottement en ajoutant des cônes de friction tout en limitant l'encombrement du synchroniseur.

. A cette fin, on dissocie la fonction de crabotage et la fonction de synchronisation. On supprime ainsi la couronne de crabots du synchroniseur de sorte qu'il est possible d'ajouter des cônes de friction sans toutefois augmenter son encombrement d'origine. L'augmentation de la surface en frottement par ajout de cônes de friction permet d'augmenter le couple transmis lors du changement de rapport de vitesse.

. La fonction de crabotage est alors assurée par ailleurs par des crabots indépendants positionnés à côté des pignons fous.

. L'invention permet ainsi, lors d'un changement de rapport de vitesses, de continuer à transmettre un couple important aux roues et également de synchroniser le régime de l'arbre sur lequel il est monté au régime cible du rapport à engager.

. L'invention peut être mise en oeuvre avec les boîtes de vitesse à un ou plusieurs arbres secondaires décrites dans les demandes de brevet françaises possédant le numéro de dépôt FR 07 58645 et FR 07 58648.

. L'invention concerne un ensemble de synchronisation et de crabotage monté sur un arbre de boîte de vitesses pour synchroniser et accoupler sélectivement ledit arbre avec deux pignons fous conformément à l'objet de la revendication 1.

. Selon une réalisation, l'ensemble comporte 8 cônes de friction de manière à présenter 7 surfaces de frottement entre les cônes de friction.

. Selon une réalisation, les cônes de friction sont liés en rotation alternativement au moyeu commun et au pignon fou auquel ils sont destinés à correspondre.

. Selon une réalisation, chaque cône de friction est relié au moyeu commun ou au pignon fou lui correspondant via des tocs, de sorte que les cônes de friction sont centrés par rapport à leur axe de rotation.

. Selon une réalisation, pour chaque synchroniseur, le cône de friction de plus petit diamètre est lié en rotation au pignon fou en regard duquel le synchroniseur est destiné à être positionné.

. Selon une réalisation, le cône de friction de plus grand diamètre est lié en rotation au moyeu commun.

. Selon une réalisation, il comporte un manchon positionné en périphérie des cônes de friction.

. Selon une réalisation, l'agencement des tocs est tel que le manchon est centré sur les cônes de friction de plus grand diamètre.

. Selon une réalisation, le manchon est libre en rotation.

. Selon une réalisation, il est destiné à être monté sur un arbre primaire ou un arbre secondaire d'une boite de vitesses à un ou plusieurs arbres secondaires.

. L'invention sera mieux comprise à la lecture de la description qui suit et à l'examen des figures qui l'accompagnent. Ces figures ne sont données qu'à titre illustratif mais nullement limitatif de l'invention. Elles montrent :

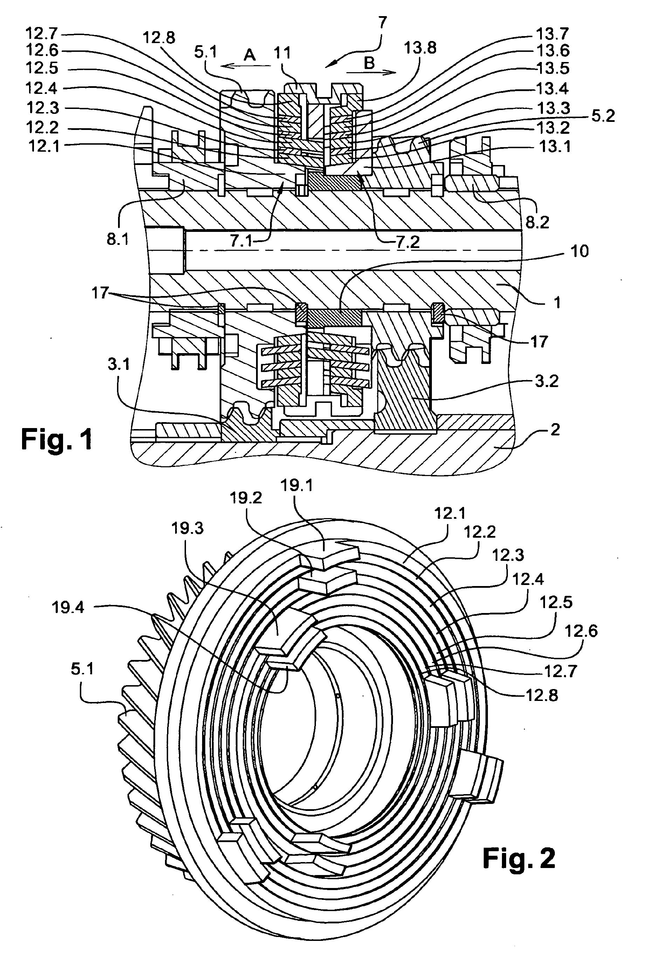

. Figure 1 : une vue en coupe d'un dispositif de synchronisation selon l'invention monté sur un arbre de boîte de vitesses ;

. Figure 2 : une vue en trois dimensions d'un pignon fou et des cônes de friction qui lui sont associés dans le cadre du dispositif de synchronisation selon l'invention.

. La figure 1 montre une vue en coupe d'un arbre primaire 1 lié à un arbre secondaire 2 d'une boîte de vitesses via des engrenages formant des rapports de vitesse. Ces engrenages sont formés chacun par une roue 3.1, 3.2 liée en rotation à l'arbre 2 et un pignon 5.1, 5.2 fou monté sur l'arbre 1.

. Un dispositif 7 de synchronisation selon l'invention, formé de deux synchroniseurs 7.1, 7.2 symétriques par rapport à un plan médian, est monté sur l'arbre 1 entre les deux pignons fous 5.1, 5.2.

. Par ailleurs, deux manchons de crabotage 8.1, 8.2 sont positionnés respectivement à côté des pignons fous 5.1, 5.2. Ces manchons 8.1, 8.2 sont liés en rotation à l'arbre 1 et sont susceptibles de se déplacer suivant l'axe de cet arbre. Ils comportent chacun une couronne de crabots susceptibles d'entrer en coopération avec des dents des pignons 5.1, 5.2.

. Chaque pignon fou 5.1, 5.2 présente ainsi d'un côté un synchroniseur 7.1, 7.2 assurant la synchronisation du pignon fou avec l'arbre 2 et de l'autre côté un manchon de crabotage 8.1, 8.2 assurant sélectivement l'accouplement d'un des pignons fous 5.1, 5.2 avec l'arbre 1.

. Plus précisément, les synchroniseurs 7.1, 7.2 comportent un moyeu commun 10 entraîné en rotation avec l'arbre 1 au moyen d'un jeu de cannelures. L'utilisation du moyeu commun 10 confère au synchroniseur une architecture compacte.

. Chaque synchroniseur 7.1, 7.2 comporte des cônes de friction 12, 13 empilés les uns sur les autres et concentriques. Ces cônes 12, 13 sont positionnés entre le moyeu 10 et le pignon fou 5.1, 5.2 lui correspondant.

. Ces cônes de friction 12, 13 sont liés en rotation alternativement au moyeu 10 et au pignon 5.1, 5.2 leur correspondant. Ainsi si les cônes 12.1, 13.1 sont liés en rotation au pignon fou, les cônes 12.2, 13.2 sont liés en rotation au moyeu 10, et les cônes 12.3, 13.3 sont liés en rotation au pignon fou, et ainsi de suite...

. A cet effet, les cônes de friction 12, 13 comportent des languettes (appelées tocs) disposées régulièrement sur le contour qui entrent en coopération avec des ouvertures correspondantes ménagées dans une face radiale du moyeu 10 ou des pignons 5.1, 5.2 (suivant l'élément avec lequel le cône de friction est lié en rotation).

. En outre, le cône 12.1, 13.1 de friction de plus petit diamètre est lié en rotation au pignon 5.1, 5.2 lui correspondant (ce cône pouvant être intégré ou non au pignon) et le cône 12.7, 13.7 de friction de plus grand diamètre est lié en rotation au moyeu 10.

. Cet agencement permet ainsi d'avoir une reprise de l'effort axial par chaque pignon respectif car le sens de l'effort axial de synchronisation est toujours dirigé vers le pignon en le poussant.

. Chaque synchroniseur comporte ici 8 cônes de friction de manière à présenter 7 surfaces de frottement entre les cônes. Dans l'invention, on envisage l'utilisation d'au moins 5 cônes de friction de sorte que chaque synchroniseur présente au moins 4 surfaces de frottement.

. En outre, un manchon 11 est positionné en périphérie des cônes de friction 12, 13.

. Sous l'action d'un effort axial exercé via le manchon 11 suivant la flèche A, le synchroniseur 7.1 entre en coopération avec le pignon 5.1. Sous l'action d'un effort axial exercé via le manchon 11 suivant la flèche B, le synchroniseur 7.2 entre en coopération avec le pignon 5.2.

. Lorsqu'un synchroniseur 7.1, 7.2 est actionné, son entraînement en rotation est tel que chaque face de frottement des cônes 12, 13 transmet du couple au pignon fou 5.1, 5.2 avec lequel il entre en coopération.

. Une telle architecture permet, via un actionneur classique dimensionné de manière adéquate, de transmettre temporairement un couple important tout en garantissant une bonne maîtrise de ce couple. En effet, la transmission axiale de l'effort de synchronisation est facilement contrôlable.

. Par ailleurs, les languettes (tocs) qui relient les cônes de friction 12, 13 au moyeu 10 ou au pignon 5.1, 5.2 ont pour fonction de centrer ces cônes de friction 12, 13 par rapport à leur axe de rotation. Un tel agencement permet au manchon 11 d'être centré sur les cônes de friction 12, 13 de plus gros diamètre, de sorte que le moyeu 10 peut être de petite épaisseur puisqu'il n'assure pas le guidage en translation du manchon 11.

. Le manchon 11 n'est lié en rotation à aucune pièce mais pourrait en variante être lié en rotation soit au moyeu 10, soit aux cônes de friction 12, 13 présentant le plus grand diamètre.

. Par ailleurs, l'arbre 1 comporte des moyens d'arrêt 17 qui forment notamment des butées axiales pour les pignons fous 5.1 et 5.2.

. Le dispositif de synchronisation 1 peut être utilisé avec une boîte de vitesses à un ou plusieurs arbres secondaires. Ce dispositif 1 peut alors être monté soit sur l'arbre primaire soit sur l'un des arbres secondaires de la boîte de vitesses.

. Ce dispositif de synchronisation est tel qu'il est possible de le positionner entre un rapport maximal et un rapport intermédiaire de la boîte de vitesses. Ce dispositif peut alors assurer seul la transmission d'un couple lors d'un changement de rapport de vitesse sans ruptures de couple.

. La figure 2 montre une vue détaillée du pignon 5.1 et des cônes de friction 12.1-12.8, ici au nombre de 8, qui lui sont associés.

. Plus précisément, ces cônes 12.1-12.8 présentent chacun des languettes 19 rectangulaires (ou tocs) disposées régulièrement sur leur contour. Ici chaque cône comporte trois tocs espacés entre eux sensiblement de 120 degrés.

. Afin que ces cônes 12 soient entraînés alternativement en rotation par le pignon 5.1 et le moyeu 10, les tocs 19.1, 19.3, 19.5 et 19.7 appartenant respectivement aux cônes 12.1, 12.3, 12.5, 12.7 sont destinées à entrer en coopération avec des ouvertures ménagées dans un paroi radiale du moyeu 10 (non représentées). Tandis que les tocs appartenant aux cônes 12.2, 12.4, 12.6 et 12.8 entrent en coopération avec des ouvertures complémentaires ménagées dans une paroi radiale du pignon 5.1.

## Revendications

1. Ensemble de synchronisation et de crabotage monté sur un arbre (1) de boîte de vitesses pour synchroniser et accoupler sélectivement ledit arbre (1) avec deux pignons fous (5.1, 5.2), comportant un dispositif de synchronisation (7), comportant :
- deux synchroniseurs (7.1, 7.2) montés sur un moyeu (10) commun destiné à être lié en rotation audit arbre (1),
- chaque synchroniseur (7.1, 7.2) comportant des cônes de friction (12, 13) empilés les uns sur les autres, ces cônes de friction (12, 13) étant positionnés entre le moyeu (10) et le pignon fou (5.1, 5.2) en regard duquel le synchroniseur est destiné à être positionné,
- chaque synchroniseur (7.1, 7.2) étant apte, lorsqu'il est déplacé axialement en direction d'un des pignons fous (5.1, 5.2), à transmettre du couple par frottement, via les cônes de friction (12, 13), entre ledit arbre (1) et le pignon fou (5.1, 5.2) en direction duquel il est déplacé,
- les synchroniseurs (7.1, 7.2) sont dépourvus de dispositif de crabotage entre l'arbre (1) et les pignons fous et
- les synchroniseurs (7.1, 7.2) comportent chacun au moins cinq cônes de friction (12, 13) de manière à présenter au moins quatre surfaces de frottement entre les cônes de friction,
- le dispositif de synchronisation (7) étant positionné entre les deux pignons fous (5.1, 5.2), ce dispositif de synchronisation (7) assurant la synchronisation desdits pignons fous (5.1, 5.2) avec l'arbre (1), et
- deux manchons de crabotage (8.1, 8.2) positionnés à côté de chaque pignon fou (5.1, 5.2), ces manchons de crabotage (8.1, 8.2) assurant de manière sélective l'accouplement entre l'arbre (1) et un des pignons fous (5.1, 5.2),
**caractérisé en ce que** :
- l'agencement dudit dispositif de synchronisation (7) et des manchons de crabotage (8.1, 8.2) est tel que chaque pignon fou (5.1, 5.2) présente d'un côté ledit synchroniseur (7.1, 7.2) et de l'autre un manchon de crabotage (8.1, 8.2).

2. Ensemble selon la revendication 1, **caractérisé en ce qu'**il comporte 8 cônes de friction de manière à présenter 7 surfaces de frottement entre les cônes de friction.

3. Ensemble selon la revendication 1 ou 2, **caractérisé en ce que** les cônes de friction (12, 13) sont liés en rotation alternativement au moyeu commun (10) et au pignon fou (5.1, 5.2) auquel ils sont destinés à correspondre.

4. Ensemble selon la revendication 3, **caractérisé en ce que** chaque cône de friction (12, 13) est relié au moyeu commun (10) ou au pignon fou (5.1, 5.2) lui correspondant via des tocs (19), de sorte que les cônes de friction (12, 13) sont centrés par rapport à leur axe de rotation.

5. Ensemble selon l'une des revendications 1 à 4, **caractérisé en ce que** pour chaque synchroniseur (7.1, 7.2), le cône de friction (12.1, 13.1) de plus petit diamètre est lié en rotation au pignon fou (5.1, 5.2) en regard duquel le synchroniseur est destiné à être positionné.

6. Ensemble selon l'une des revendications 1 à 5, **caractérisé en ce que** le cône de friction (12.6, 13.6) de plus grand diamètre est lié en rotation au moyeu commun (10).

7. Ensemble selon l'une des revendications 1 à 6, **caractérisé en ce qu'**il comporte un manchon (11) positionné en périphérie des cônes de friction (12, 13).

8. Ensemble selon les revendications 4 et 7, **caractérisé en ce que** l'agencement des tocs (19) est tel que le manchon (11) est centré sur les cônes de friction (12.6, 13.6) de plus grand diamètre.

9. Ensemble selon la revendication 7 ou 8, **caractérisé en ce que** le manchon (11) est libre en rotation.

10. Ensemble selon l'une des revendications 1 à 9, **caractérisé en ce qu'**il est destiné à être monté sur un arbre primaire ou un arbre secondaire d'une boite de vitesses à un ou plusieurs arbres secondaires.

## Patentansprüche

1. Synchronisation- und Klauenkupplungseinheit, die auf eine Schaltgetriebewelle (1) montiert ist, um selektiv die Welle (1) mit zwei Freilaufritzeln (5.1, 5.2) zu synchronisieren und zu kuppeln, die eine Synchronisationseinrichtung (7) aufweist, die Folgendes aufweist:
- zwei Synchronisationseinrichtungen (7.1, 7.2), die auf eine gemeinsame Nabe (10) montiert sind, die dazu bestimmt ist, in Drehung mit der Welle (1) verbunden zu sein,
- wobei jede Synchronisationseinrichtung (7.1, 7.2) Reibungskegel (12, 13) aufweist, die aufeinander gestapelt sind, wobei diese Reibungskegel (12, 13) zwischen der Nabe (10) und dem Freilaufritzel (5.1, 5.2), gegenüber welchem die Synchronisationseinrichtung positioniert werden soll, positioniert sind,
- wobei jede Synchronisationseinrichtung (7.1, 7.2), wenn sie axial in Richtung eines der Freilaufritzel (5.1, 5.2) verlagert wird, fähig ist, Drehmoment durch Reibung über die Reibungskegel (12, 13) zwischen der Welle (1) und dem Freilaufritzel (5.1, 5.2), in dessen Richtung es verlagert wird, zu übertragen,
- die Synchronisationseinrichtungen (7.1, 7.2) haben keine Kupplungsvorrichtung zwischen der Welle (1) und den Freilaufritzeln und
- die Synchronisationseinrichtungen (7.1, 7.2) weisen jeweils mindestens fünf Reibungskegel (12, 13) derart auf, dass sie mindestens vier Reibungsoberflächen zwischen den Reibungskegeln aufweisen,
- die Synchronisierungseinrichtung (7) ist zwischen den zwei Freilaufritzeln (5.1, 5.2) positioniert, wobei diese Synchronisationseinrichtung (7) die Synchronisation der Freilaufritzel (5.1, 5.2) mit der Welle (1) sicherstellt, und
- zwei Klauenkupplungsmuffen (8.1, 8.2), die neben jedem Freilaufritzel (5.1, 5.2) positioniert sind, wobei diese Klauenkupplungsmuffen (8.1, 8.2) selektiv das Kuppeln zwischen der Welle (1) und einem der Freilaufritzel (5.1, 5.2) sicherstellen,
**dadurch gekennzeichnet, dass**:
- die Einrichtung der Synchronisationseinrichtung (7) und der Klauenkupplungsmuffen (8.1, 8.2) derart ist, dass jedes Freilaufritzel (5.1, 5.2) auf einer Seite die Synchronisationseinrichtung (7.1, 7.2) und auf der anderen Seite eine Klauenkupplungsmuffe (8.1, 8.2) aufweist.

2. Einheit nach Anspruch 1, **dadurch gekennzeichnet, dass** sie 8 Reibungskegel derart aufweist, dass sie zwischen den Reibungskegeln 7 Reibungsoberflächen aufweist.

3. Einheit nach Anspruch 1 oder 2, **dadurch gekennzeichnet, dass** die Reibungskegel (12, 13) in Drehung abwechselnd mit der gemeinsamen Nabe (10) und dem Freilaufritzel (5.1, 5.2), dem sie entsprechen sollen, verbunden sind.

4. Einheit nach Anspruch 3, **dadurch gekennzeichnet, dass** jeder Reibungskegel (12, 13) mit der gemeinsamen Nabe (10) oder dem Freilaufritzel (5.1, 5.2), das ihm entspricht, über Antriebsmitnehmer (19) derart verbunden ist, dass die Reibungskegel (12, 13) in Bezug auf ihre Rotationsachse zentriert sind.

5. Einheit nach einem der Ansprüche 1 bis 4, **dadurch gekennzeichnet, dass** für jede Synchronisationseinrichtung (7.1, 7.2) die Reibungskegel (12.1, 13.1) mit dem kleinsten Durchmesser in Drehung mit dem Freilaufritzel (5.1, 5.2), gegenüber welchem die Synchronisierungseinrichtung positioniert werden soll, verbunden ist.

6. Einheit nach einem der Ansprüche 1 bis 5, **dadurch gekennzeichnet, dass** der Reibungskegel (12.6, 13.6) mit größtem Durchmesser in Drehung mit der gemeinsamen Nabe (10) verbunden ist.

7. Einheit nach einem der Ansprüche 1 bis 6, **dadurch gekennzeichnet, dass** sie eine Muffe (11) aufweist, die am Umfang der Reibungskegel (12, 13) positioniert ist.

8. Einheit nach den Ansprüchen 4 und 7, **dadurch gekennzeichnet, dass** die Einrichtung der Antriebsmitnehmer (19) derart ist, dass die Muffe (11) auf den Reibungskegeln (12.6, 13.6) mit größtem Durchmesser zentriert ist.

9. Einheit nach Anspruch 7 oder 8, **dadurch gekennzeichnet, dass** die Muffe (11) in Drehung frei ist.

10. Einheit nach einem der Ansprüche 1 bis 9, **dadurch gekennzeichnet, dass** sie dazu bestimmt ist, auf eine Hauptwelle oder eine Hilfswelle eines Schaltgetriebes mit einer oder mehreren Hilfswellen montiert zu sein.

## Claims

1. A synchronisation and dog-clutching assembly mounted on a gearbox shaft (1) to synchronise and couple selectively the said shaft (1) with two idler gears (5.1, 5.2), comprising a synchronisation device (7), comprising:
- two synchronizers (7.1, 7.2) mounted on a shared hub (10) which is intended to be connected in rotation to the said shaft (1),
- each synchronizer (7.1, 7.2) comprising friction cones (12, 13) stacked one above the other, these friction cones (12, 13) being positioned between the hub (10) and the idler gear (5.1, 5.2) in front of which the synchronizer is intended to be positioned,
- each synchronizer (7.1, 7.2) being able, when it is moved axially in the direction of one of the idler gears (5.1, 5.2), to transmit torque by friction, via the friction cones (12, 13), between the said shaft (1) and the idler gear (5.1, 5.2) in the direction of which it is moved,
- the synchronizers (7.1, 7.2) are without a dog-clutching device between the shaft (1) and the idler gears and
- the synchronizers (7.1, 7.2) each comprise at least five friction cones (12, 13) so as to present at least four friction surfaces between the friction cones,
- the synchronisation device (7) being positioned between the two idler gears (5.1, 5.2), this synchronisation device (7) ensuring the synchronisation of the said idler gears (5.1, 5.2) with the shaft (1), and
- two dog clutch sleeves (8.1, 8.2) positioned beside each idler gear (5.1, 5.2), these dog clutch sleeves(8.1, 8.2) ensuring in a selective manner the coupling between the shaft (1) and one of the idler gears (5.1, 5.2),
**characterized in that**
- the arrangement of the said synchronisation device (7) and of the dog clutch sleeves (8.1, 8.2) is such that each idler gear (5.1, 5.2) has on one side the said synchronizer (7.1, 7.2) and on the other a dog clutch sleeve (8.1, 8.2).

2. The assembly according to Claim 1, **characterized in that** it comprises 8 friction cones so as to present 7 friction surfaces between the friction cones.

3. The assembly according to Claim 1 or 2, **characterized in that** the friction cones (12, 13) are connected in rotation alternately to the shared hub (10) and to the idler gear (5.1, 5.2) to which they are intended to correspond.

4. The assembly according to Claim 3, **characterized in that** each friction cone (12, 13) is connected to the shared hub (10) or to the idler gear (5.1, 5.2) corresponding thereto via dogs (19), such that the friction cones (12, 13) are centred with respect to their rotation axis.

5. The assembly according to one of Claims 1 to 4, **characterized in that** for each synchronizer (7.1, 7.2) the friction cone (12.1, 13.1) of smaller diameter is connected in rotation to the idler gear (5.1, 5.2) in front of which the synchronizer is intended to be positioned.

6. The assembly according to one of Claims 1 to 5, **characterized in that** the friction cone (12.6, 13.6) of greater diameter is connected in rotation to the shared hub (10).

7. The assembly according to one of Claims 1 to 6, **characterized in that** it comprises a sleeve (11) positioned on the periphery of the friction cones (12, 13).

8. The assembly according to Claims 4 to 7, **characterized in that** the arrangement of the dogs (19) is such that the sleeve (11) is centred on the friction cones (12.6, 13.6) of greater diameter.

9. The assembly according to Claim 7 or 8, **characterized in that** the sleeve (11) is free in rotation.

10. The assembly according to one of Claims 1 to 9, **characterized in that** it is intended to be mounted on a primary shaft or a secondary shaft of a gearbox having one or more secondary shafts.
